# NEW EUROPEAN PATENT SPECIFICATION

(11) **EP 0 689 883 B2**
(45) Date of publication and mention of the opposition decision: **15.06.2005**
(45) Mention of the grant of the patent: 03.02.1999
(21) Application number: 95109638.7
(22) Date of filing: 21.06.1995
(51) Int. Cl.: B21B 28/04, B21B 28/02, B23B 5/08

(54) **Roller cutting method and apparatus for a plural-roll rolling mill**
Walzenschneidverfahren und Vorrichtung für ein Mehrwalzen-Walzwerk
Dispositif et procédé pour couper des cylindres d'un laminoir à plusieurs cylindres

(30) Priority: 29.06.1994 JP 14793094
(43) Date of publication of application: 03.01.1996
(73) Proprietor: JFE Steel Corporation, Tokyo (JP)
(72) Inventor: Takeda, Ryo, c/o Mizushima Works, Mizushima, Kurashiki-shi, Okayama 712 (JP); Kondo, Hidenori,c/o Mizushima Works, Mizushima, Kurashiki-shi, Okayama 712 (JP); Shinkai, Yoshihiro,c/o Mizushima Works, Mizushima, Kurashiki-shi, Okayama 712 (JP)
(74) Representative: Grünecker, Kinkeldey, Stockmair & Schwanhäusser Anwaltssozietät

(56) References cited:
- EP-A- 0 300 230
- EP-A- 0 335 286
- EP-B- 0 300 230
- DE-B- 2 503 284
- DE-U- 1 977 661
- US-A- 5 134 910
- PATENT ABSTRACTS OF JAPAN vol. 18, no. 302 (M-1618) 9 June 1994 & JP-A-60 063 601 (KAWASAKI STEEL) 8 March 1994
- PATENT ABSTRACTS OF JAPAN vol. 13, no. 25 (M-787) 20 January 1989 & JP-A-63 237 801 (DAIDO STEEL CO.) 4 October 1988

## Description

### BACKGROUND OF THE INVENTION

### Field of the Invention

The present invention relates to a method and apparatus for cutting the rolls of a plural-roll rolling mill without removing the rolls from the rolling mill.

### Description of the Related Art

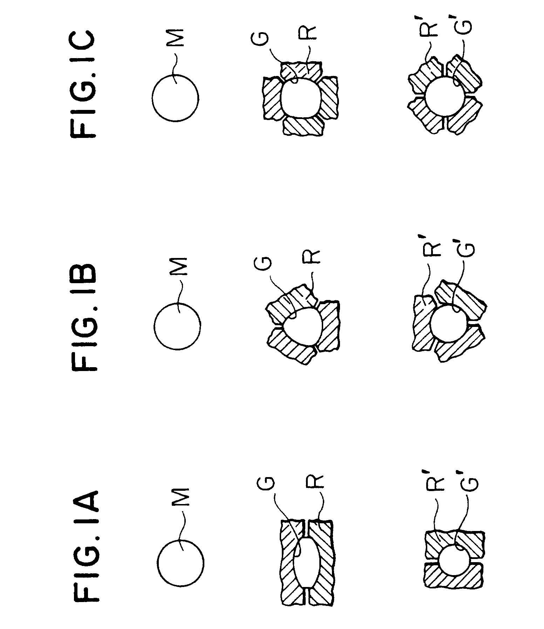

Methods of rolling wire rods and steel bars in sizing mills can be grouped according to the number of pairs of rolls used in a stand; i.e., two-roll, three-roll and four-roll methods. As shown in Figs. 1A-1C, such methods involve rolling a material M through a plurality of passes by pairs of rolls (R, R') whose peripheral surfaces are provided with grooves (G, G') formed to predetermined sectional shapes. In general, dimensional accuracy of the product increases with the number of rolling pairs employed.

A four-roll rolling method is disclosed in, for example, Japanese Patent Application Laid-Open No. 6(1994)-63601 and United States Patent No. 5,363,682. Since the surface of the roll calibers is worn or roughed after a time, the calibers are usually recut to enable reuse of the rolls.

The calibers are conventionally recut by removing the rolls from the rolling mill. However, the conventional method deteriorates mill productivity since dismounting and remounting the rolls requires the stoppage of rolling operations and consumes much time. Further, detaching and reattaching the rolls is a dangerous operation that requires considerable skill and manpower.

Japanese Patent Application Laid-Open No. 63(1988)-237801 and the document "Precise Rolling of Steel Bars by Three-Directional Finishing Rolls" (Symposium on Plastic Working, Vol. 139, pages 23-29, 1991) disclose means for cutting roll calibers while the rolls are mounted.

Japanese Patent Application Laid-Open No. 63(1988)-237801 discloses a method of cutting the stand-mounted rolls of a two-roll rolling mill. According to the method, the rolling mill is removed from a rolling line and is horizontally aligned by fixing the position of the rolling mill through use of a pusher. The backlash of the roll is removed by rotating the roll while simultaneously pushing the roll in the thrust direction of a roll axis. A radial preload mechanism prevents radial movement of the roll. However, since the roll to be cut is not pushed toward a pass line, the roll has backlash in the direction of the pass line which greatly disperses the cutting margin of the roll.

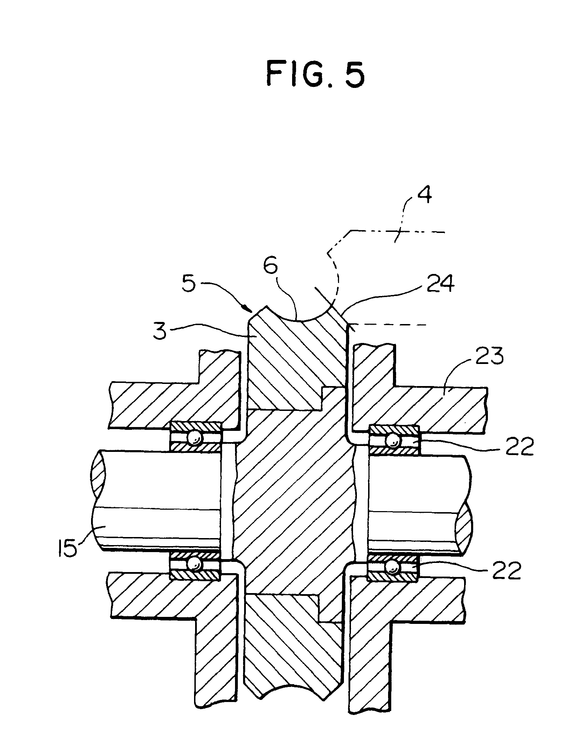

The method disclosed in "Precise Rolling of Steel Bars by Three-Directional Finishing Rolls" (in Fig. 5, page 26) is a method for cutting the rolls of a three-roll type rolling mill. According to the method, the caliber of each of the rolls is ground while removing the backlash of the roll by inserting a conical grinding stone (ring cutting tool) between the three rolls. However, grinding the caliber serves to increase machining time, and the grinding itself requires considerable skill because the machined shape of a roll is changed by the wear caused by the cutting tool. Moreover, the method does not describe any means by which the rolls of the rolling mill can be cut as mounted on the rolling mill, particularly on a four-roll rolling mill.

The closest prior art which has become known is EP-A-0 300 230 which discloses a method of repairing rolls of rolling mills and furthermore, discloses a roll cutting apparatus. Said conventional method or repairing comprises the following sequences of steps:

First, the rolls are caused to come into contact with a roll fixing device by increasing the gap therebetween; thereafter, the surface of the respective rolls is cut by means of a roll cutting tool; thereafter, the rolls are positioned; and finally the gap between the rolls is set to a set value depending on the size of the rolling material.

Said conventional method comprises changing of the positional relationship between the rolls in the first step and requires readjusting the rolls prior to the final setting step.

It is the object of the present invention to provide a method and an apparatus by which the rolls of a plural-roll rolling mill can be cut as mounted on the rolling mill.

In terms of a method, the above object is achieved by the subject matter of ciaim 1. Preferred embodiments and further improvements of the inventive method are defined in the sub-claims 2, 3 and 4, depending from claim 1.

In terms of an apparatus, the above object is achieved by the subject matter of claim 5.

Preferred embodiments and further improvements of the inventive apparatus are defined in sub-claims 6 - 13, depending from claim 5.

### BRIEF DESCRIPTION OF THE DRAWINGS [0015]

FIG. 1A, FIG. 1B and FIG. 1C are schematic views showing an example of a two-roll method (A), three-roll method (B) and four-roll method (C);
FIG. 2 is a plan view showing an embodiment of an apparatus according to the present invention;
FIG. 3 is a front elevational view schematically showing a four-roll rolling mill as a subject of the present invention;
FIG. 4 is a cross sectional view taken along the line A - A of FIG. 3;
FIG. 5 is an enlarged view of a portion of the embodiment shown in FIG. 4;
FIG. 6A, FIG. 6B and FIG. 6C are schematic views showing an example of a two-roll rolling mill(A), three-roll rolling mill(B) and four-roll rolling mill(C) of the present invention; and
FIG. 7 is a view showing an example of a pusher of the present invention.

### DETAILED DESCRIPTION OF THE INVENTION

A method according to the present invention will be described below involving an apparatus according to the present invention.

First, a two, three or four-roll rolling mill is removed from a rolling line and fixed on a base table. Each roll is then aligned with respect to a cutting tool by moving the positionally adjustable base on which the cutting machine is held. A contact sensor on the cutting machine is caused to come into contact with a reference column disposed on the outside surface of the rolling mill.

Since the reference column is disposed at a position spaced from the pass line by a predetermined distance, and the contact sensor is disposed at a position spaced from the cutting tool by a predetermined distance, it can be determined whether the cutting tool is located at a preset reference position with respect to each roll by abutting the contact sensor against the reference column. Thus, when the cutting tool is not located at the preset reference position, the cutting tool is aligned by moving the position adjusting base as required.

It is understood that the sensor used for the aforesaid positional alignment is not limited to the combination of the contact sensor and the reference column. For example, an optical sensor, e.g., a laser sensor, may be used.

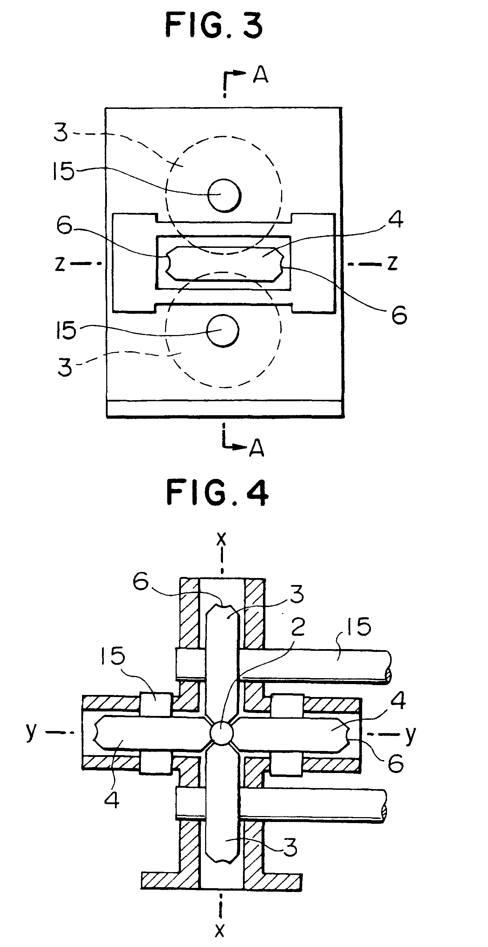

The positional alignment is accomplished as follows. Referring to FIG. 4, the rolls mounted on a four-roll rolling mill include two coplanar rolls (3, 3) and two other coplanar rolls (4, 4). The respective axes (15) are aligned such that they are disposed on the same plane, and the lines extended from the axes (15) are substantially perpendicular to each other. That is, the rolls mounted on the rolling mill are symmetrically oriented around the pass line (2) (FIG. 1 and FIG. 4), the pass line being defined as a center through which a rolling material passes, and preferably as the intersection of an X-axis and a Y-axis corresponding to the axes of the rolls. The pass line is located at a position spaced from the outside surface of the rolling mill by a predetermined distance. Consequently, the machining reference point (or coordinate) of the cutting machine with respect to the two, three or four rolls can be determined by accurately establishing a set position relative to the pass line Z-Z on the outside surface of the rolling mill (refer to FIG. 3).

After completing the positional alignment process, a horizontal roll drive source (or a vertical or angular roll drive source) is moved and connected to the support shaft of the horizontal or angular roll (or the vertical or angular roll). It will be appreciated that the respective sets of rolls do not need to be horizontal or vertical but may be tilted to various angles if desired. In the description which follows, we will refer to "horizontal" and "vertical" rolls as a matter of convenience and without limiting the scope of the invention in that regard. The concave caliber of the horizontal roll (or the vertical roll) is cut with the cutting tool to a desired shape by rotating the horizontal roll (or the vertical roll) with a drive source.

Each of the horizontal rolls and the vertical rolls inevitably possesses backlash at the respective portions of a bearing, bearing case, support shaft and the like (FIG. 5), thus causing a slight dislocation downward of each roll by its dead-weight. Cutting a downwardly dislocated roll decreases the machining accuracy of the roll caliber.

This problem is solved in the present invention by cutting the concave calibers only after the rolls are pushed toward the pass line by a pusher until the outside peripheral surfaces of the rolls contact each other (that is, when the rolls are disposed at the reference positions), thereby allowing accurate cutting of the concave surface of the caliber.

Further, when an extendible and contractible contact sensor is utilized in the apparatus according to the present invention, the contact sensor extends to confirm positional alignment, then retracts so as to not obstruct the cutting operation.

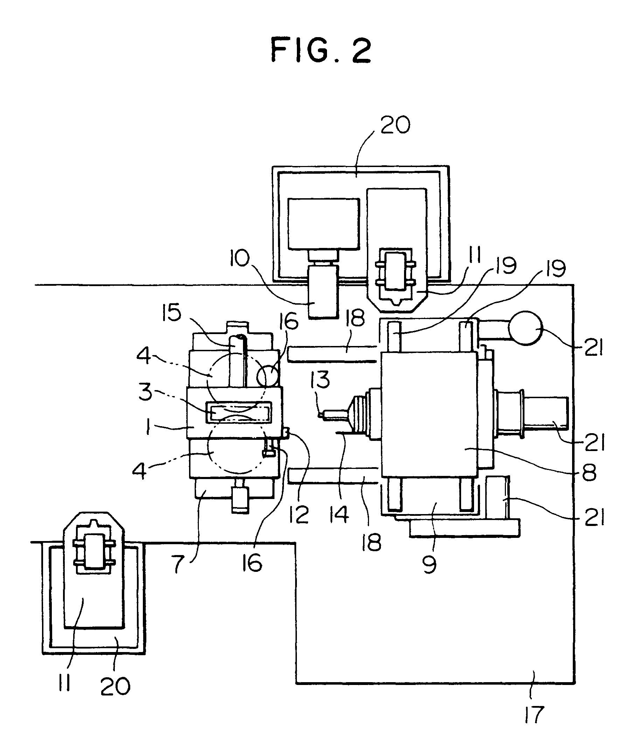

An embodiment of the apparatus of the present invention is shown in FIG. 2 (plan view).

In the embodiment, a base table (7) for holding a rolling mill (1) thereon and a cutting machine (8) for carrying out cutting operations are disposed on a flat machining table (17) such that the rear surface of rolling mill (1) is parallel with the front surface of cutting machine (8).

Since base table (7) is unmovably fixed on machining table (17) and rolling mill (1) is unmovably fixed on base table (7), rolling mill (1) is unmovable. A reference column (12) projects from the rear surface of rolling mill (1).

A cutter position adjusting base (9) is arranged such that it can be freely moved forward, rearward, rightward, leftward, upward and downward by motors (21). A pair of main rails (18) disposed on machining table (17) and traveling in the forward and rearward directions, a pair of sub-rails (19) traveling in the right and left directions, and a pair of guide rails in the upward and downward directions (not shown) guide the movement of position adjusting base (9). Cutting machine (8) is assembled on sub-rails (19) which project through a fixing member (not shown). Cutting tool (13) projects from the front surface of cutting machine (8). Contact sensor (14) is disposed at a position spaced from cutting tool (13) by a predetermined distance.

Cutting machine (8) is a numerically controlled machine tool conventionally used by which the concave calibers (6) defined on the outside peripheral surfaces (5) of rolls (3) and (4) are automatically cut to predetermined shapes (refer to cavities (6) at FIGS. 3, 4 and 5).

A vertical roll drive source (11) and a horizontal roll drive source (10) are placed on a truck (20) and disposed on the right side of the machining table (17), movably and detachably connected to the support shafts (15) of vertical rolls (4) and horizontal rolls (3). Another vertical roll drive source (11), placed on a truck (20), is disposed on the left side of the machining table (17) (refer to FIG. 2). When horizontal roll (3) is to be cut, horizontal roll drive source (10) is connected to support shaft (15) of horizontal roll (3) and transmitting rotational force to rotate horizontal roll (3). Cutting tool (13) abuts against outside peripheral surface (5) of horizontal roll (3) and cuts caliber (6) to a predetermined shape. After completion of the cutting operation, horizontal roll drive source (10) is disconnected from support shaft (15) and returned to a predetermined position (refer to FIG. 2).

When caliber (6) of horizontal roll (3) is cut with cutting tool (13), horizontal roll drive source (10) is connected to and disconnected from support shaft (15) of horizontal roll (3). As an example of how this connection/disconnection may be accomplished, a male gear coupling may be provided at the extreme end of support shaft (15). A corresponding female gear coupling is provided at the spline extreme end of the output shaft of horizontal drive source (10), thus confronting the male gear coupling at the extreme end of the support shaft (15). The female gear coupling is advanced and retracted in accordance with the rotational direction of the output shaft of horizontal roll drive source (10) so that the female gear coupling is connected to and disconnected from the male gear coupling.

Likewise, when caliber (6) of vertical roll (4) is cut with cutting tool (13), vertical roll drive source (11) is connected to and disconnected from the support shaft (15) of vertical roll (4). Again, a gear may be integrally mounted on each vertical roll (4), and a gear fixed to the extreme end (lower end) of the output shaft of the motor of the vertical roll drive source (11) is meshed with the above gear in accordance with the upward/downward displacement of vertical roll drive source (11) (refer to FIG. 2).

The present invention improves cutting accuracy by preventing the backlash of each of the four rolls (3), (4) by pushing the rolls toward pass line (2) by a pusher (16) during the cutting operation so that the outside peripheral surfaces (5) of the respective rolls lightly abut against each other. In the embodiment shown in FIG. 5, the backlash is removed by causing outside peripheral surfaces (5), each having a taper surface (24) set to 45°, to lightly abut against each other.

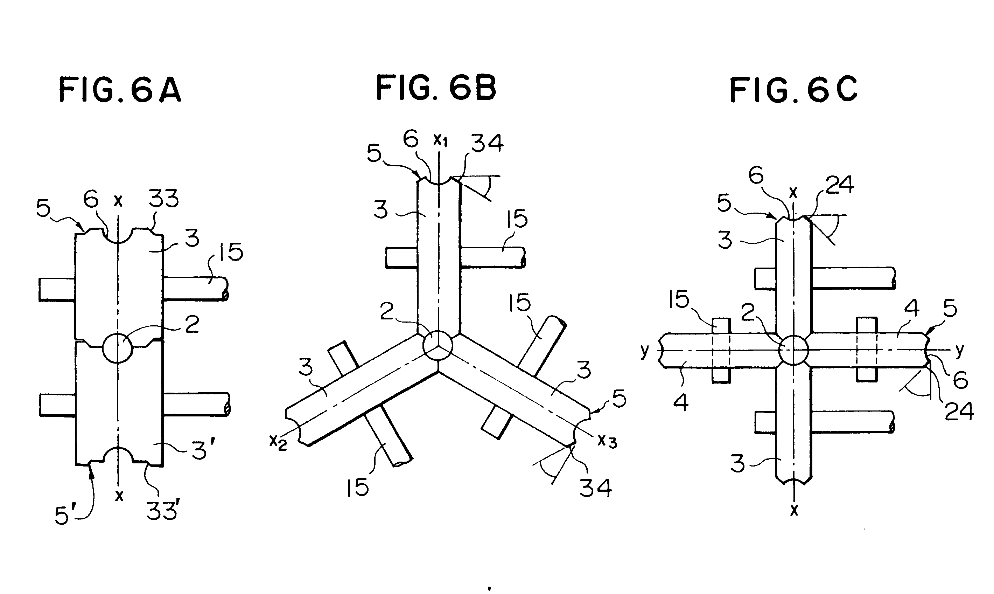

FIG. 6A, FIG. 6B and FIG. 6C are schematic views showing that the outside peripheral surfaces (5) of the respective rolls lightly abut against each other in a two-roll rolling mill(A), three-roll rolling mill(B) and four-roll rolling mill(C). The outside peripheral surfaces (5) has a step surface (33) of FIG. 6A, a taper surface (34) of FIG. 6B set to 30° or a taper surface (24) of FIG. 6C set to 45°.

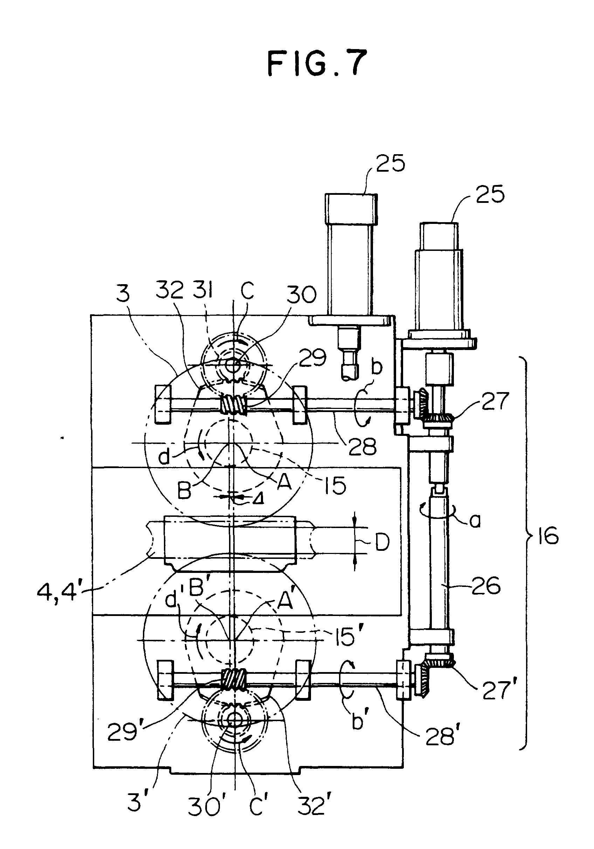

Pusher (16) pushes the rolls by utilizing the draft device of rolling mill (1). For example, FIG. 7 shows a draft device applied to a small-diameter steel bar. The draft device is arranged such that when shaft (26) is rotated in the direction of arrow (a) by a hydraulic motor (25), shaft (28) is rotated in the direction of arrow (b) through a bevel gear (27), shaft (30) is rotated in the direction of an arrow (c) through a worm gear (29), and eccentric bearing receiver (32) is rotated in the direction of an arrow (d) by spur gear (31) mounted on shaft (30). Axis A of eccentric bearing receiver (32) is thusly dislocated from axis B of roll support shaft (15) by an amount Δ so that roll axis A (i.e., roll (3)) is moved toward roll (3') by the rotation of the eccentric bearing receiver (32). Further, since roll (3') is arranged to move in contrast with roll (3), the rotation of shaft (26) in the direction of arrow (a) moves roll (3') toward roll (3) by the same amount Δ, thus reducing roll gap D. Since this embodiment employs the draft device as the pusher, when the rolling mill is removed from the rolling line, the hydraulic motor (25) is disconnected from the hydraulic pump (not shown) and the rotational torque of the shaft (26) is set to a given value by a torque wrench so that the push force acting between the rolls remains constant. It is understood that the pusher is not limited to the mechanism shown in FIG. 7; any device may be used so long as it can produce a constant push force.

The above-described method removes the backlash of the rolls such that rolling conditions are substantially reproduced.

A push force not substantially larger than the total weight of the rolls (3), (4), bearing (22), bearing case (23) or eccentric bearing case (32) and support shafts (15) (refer to FIG. 5) is preferable for pushing the rolls. If the push force is excessively large, the rolls become worn or deformed by rotating in contact with neighboring horizontal or vertical rolls, thereby lowering machining accuracy. In this embodiment, cutting was carried out with a push force of 1.5 tons on a total weight of approximately 1 ton.

Since horizontal roll drive source (10) and vertical roll drive sources (11) are fixed on the trucks (20), the supply of rotational power to rolls (3) and (4) can be switched (refer to FIG. 2).

As described above, the reference column is disposed on the outside surface of the two-roll, three-roll and four-roll rolling mill, and each roll is cut after being positionally aligned with respect to the cutting tool. The alignment is carried out by causing the contact sensor to come into contact with the reference column; thus, the respective rolls can be cut in the state that they are mounted on the rolling mill. Consequently, the dangerous and expensive operation of mounting and dismounting the rolls is eliminated, which contributes greatly to improved productivity and safety in a rolling line.

Since the backlash of the respective rolls in the thrust direction and pass line direction thereof is removed by causing the outside peripheral surfaces of the respective rolls to lightly come into contact with each other in the cutting operation, a special backlash preventing device (such as a radial preload mechanism or the like) is unnecessary. Moreover, since the rolls are cut while in a state solar to actual rolling operation, machining accuracy is increased.

Further, when an extendible and contractible contact sensor is employed, sensor contact with the roll in cutting operation is prevented, thus facilitating the roll cutting operation.

## Claims

1. A roll cutting method for cutting calibers (6) into peripheral surface portions (5) of at least two substantially aligned rotatable rolls (3;4) wherein a substantiaily centrally positioned pass line is arranged by disposing said peripheral surface portions (5) of said rolls (3;4) close to each other, the method comprising the steps of:
(a) positioning said rolls (3;4) without removing said rolls from their rolling mill (1);
(b) fixing said mill (1) at a first predetermined position;
(c) aligning a cutting tool (13) of a cutting machine (8) so that said cutting tool (13) is disposed at a second predetermined position with respect to said mill; and
(d) cutting said calibers (6) of said rolls (3;4) with said cutting tool (13) while abutting said surfaces of said rolls (3;4) against each other, and pushing said rolls (3;4) toward said pass line (2).

2. A roll cutting method according to claim 1, wherein said cutting step further comprises pushing said rolls(3) toward said pass line(2) with a push force that is greater than the total weight of said rolls(3), together with any associated bearing(22), bearing case(23) and support shafts(15).

3. A roll cutting method according to either of claims 1 or 2, wherein said aligning of said cutting tool(13) further comprises using at least two sensors, one of said sensors being disposed at said first predetermined position of said mill, and another said sensor being disposed at said second predetermined position of said cutting machine(8).

4. A roll cutting method according to claim 3, wherein said cutting machine(8) is mountably movable in three dimensions, and wherein said aligning of said cutting tool(13) further comprises causing a contact sensor(14) disposed at a position spaced from said cutting tool(13) by a first predetermined distance to come into contact with a reference column(12) disposed on the outside surface of said mill at a position spaced from said pass line(2) by a second predetermined distance.

5. A roll cutting apparatus for cutting concave roll edge calibers (6) into the outside peripheral surfaces (5) of two horizontal rolls (3) and two vertical rolls (4) wherein a pass line (2) is arrangeable by disposing said horizontal and vertical rolls so that their peripheral surfaces (5) are close to each other, said cutting apparatus comprising:
(a) a base table (7), on which said mill is fixed at a predetermined position;
(b) a cutting machine (8), having a cutting tool (13) for cutting the calibers (6) of said rolls, movably connected to said base table (7);
(c) a position alignment sensor, attached to said cutting apparatus, for aligning said cutting tool (13) with said mill (1);
(d) a position adjusting device (9), connected to said base table (7), for adjusting the relative positions of said mill (1) and said cutting tool (8);
(e) drive units, detachably connected to said rolls, for rotating said rolls; and
(f) a pusher (16) connected for pushing said rolls toward said pass line (2) such that backlash of said rolls is removed when said rolls are cut.

6. A roll cutting apparatus according to claim 5, wherein said pusher (16) is adapted to act on a draft device of said mill.

7. A roll cutting apparatus according to any of claims 4, 5 or 6, wherein said position alignment sensor further comprises at least two sensors, one sensor disposed at said predetermined position of said mill(1), and the other sensor disposed on said cutting machine(8) at a first predetermined distance from said cutting tool(13).

8. A roll cutting apparatus according to claim 7, further comprising means providing a reference point located on the outside surface of said mill(1) at a position spaced from said pass line(2) by a second predetermined distance, such that said sensor disposed on said cutting machine(8) can detect said reference point.

9. A roll cutting apparatus according to claim 8, further comprising a reference column(12) disposed on the outside surface of said mill(1) at a position spaced from said pass line(2) by a third predetermined distance, and further comprising a contact sensor(14) disposed on said cutting apparatus, such that said contact sensor(14) can detect the presence of said reference column(12).

10. A roll cutting apparatus according to claim 9, wherein said contact sensor(14) is extendible and contractible.

11. A roll cutting apparatus according to claim 5, wherein said position adjusting device(9) is a position adjusting table movable in three dimensions.

12. A roll cutting apparatus according to claim 5, wherein said drive units comprise a horizontal roll drive source(10) which is movably disposed and detachably connected to a support shaft(15) of each of said horizontal rolls(3), such that said horizontal rolls(3) are rotated during cutting operations, and vertical roll drive sources(11) each of which is movably disposed and detachably connected to a support shaft(15) of each of said vertical rolls(4), such that said vertical rolls(4) are rotated during cutting operations.

13. A roll cutting apparatus according to claim 12, further comprising a male gear disposed on one element of a corresponding support shaft(15) and a drive unit, and a female gear disposed on the other element, whereby said corresponding support shaft(15) and drive unit may be connected and disconnected.

## Patentansprüche

1. Ein Walzenschneidverfahren zum Schneiden von Einschnitten (6) in Umfangsflächenabschnitte (5) von zumindest zwei im wesentlichen ausgerichteten, drehbaren Walzen (3, 4), wobei eine im wesentlichen mittig angeordnete Walzbahn angeordnet wird, indem die genannten Umfangsflächenabschnitte (5) der genannten Walzen (3, 4) nahe beieinander angeordnet werden, wobei das Verfahren die Schritte umfaßt:
(a) Anordnen der genannten Walzen (3, 4), ohne die genannten Walzen von ihrem Walzwerk (1) zu entfemen;
(b) Festlegen des genannten Walzwerks (1) in einer ersten, vorbestimmten Position;
(c) Ausrichten eines Schneidwerkzeugs (13) einer Schneidmaschine (8), so daß das genannte Schneidwerkzeug (13) an einer zweiten, vorbestimmten Position in bezug auf das genannte Walzwerk angeordnet wird; und
(d) Schneiden der genannten Einschnitte (6) der genannten Walzen (3; 4) mit dem genannten Schneidwerkzeug (13) während die genannten Oberflächen der genannten Walzen (3; 4) in Richtung zu der genannten Walzbahn (2) gedrückt werden.

2. Ein Walzenschneidverfahren gemäß Anspruch 1, wobei der genannte Schneidschritt des weiteren umfaßt, die genannten Walzen (3) in Richtung zu der genannten Walzbahn (2) mit einer Drückkraft zu drücken, die größer als das Gesamtgewicht der genannten Walzen (3) zusammen mit irgendeinem verbundenen Lager (22), Lagergehäuse (23) und Tragwellen (15) ist.

3. Ein Walzenschneidverfahren gemäß einem der Ansprüche 1 oder 2, wobei das genannte Ausrichten des genannten Schneidwerkzeugs (13) des weiteren umfaßt, zumindest zwei Sensoren zu verwenden, wobei einer der genannten Sensoren an der genannten ersten, vorbestimmten Position des genannten Walzwerks angeordnet wird und der andere genannte Sensor an der genannten zweiten, vorbestimmten Position der genannten Schneidmaschine (8) angeordnet wird.

4. Ein Walzenschneidverfahren gemäß Anspruch 3, wobei die genannte Schneidmaschine (8) in drei Dimensionen bewegbar angebracht wird und wobei das genannte Ausrichten des genannten Schneidwerkzeugs (13) des weiteren umfaßt, zu bewirken, daß ein Berührungssensor (14), der in einer Position angeordnet ist, die von dem genannten Schneidwerkzeug (13) einen ersten, vorbestimmten Abstand aufweist, mit einer Bezugssäule (12) in Berührung kommt, die an der Außenseite des genannten Walzwerks in einer Position angeordnet ist, die von der genannten Walzbahn (2) einen zweiten, vorbestimmten Abstand aufweist.

5. Eine Walzenschneidvorrichtung zum Schneiden von konkaven Walzenrandeinschnitten (6) in die äußeren Umfangsflächen (5) zweier, horizontaler Walzen (3) und zweier, vertikaler Walzen (4), wobei eine Walzbahn (2) ausgebildet ist, indem die genannten horizontalen und vertikalen Walzen so angeordnet werden, daß ihre Umfangsflächen (5) nahe beieinander sind, wobei die genannte Schneidvorrichtung umfaßt:
(a) einen Basistisch (7), auf dem das genannte Walzwerk in einer vorbestimmten Position angebracht ist;
(b) eine Schneidmaschine (8), die ein Schneidwerkzeug (13) aufweist, um die Einschnitte (6) der genannten Walzen zu schneiden, und die bewegbar mit dem genannten Basistisch (7) verbunden ist;
(c) einen Positionsausrichtungssensor, der an der genannten Schneidvorrichtung angebracht ist, um das genannte Schneidwerkzeug (13) zu dem genannten Walzwerk (1) auszurichten;
(d) eine Positionseinstelleinrichtung (9), die mit dem genannten Basistisch (7) verbunden ist, um die relativen Positionen des genannten Walzwerks (1) und des genannten Schneidwerkzeugs (8) einzustellen;
(e) Antriebseinheiten, die lösbar mit den genannten Walzen verbunden sind, um die genannten Walzen zu drehen; und
(f) eine Drückvorrichtung (16), die zum Drücken der genannten Walzen in Richtung zu der genannten Walzbahn (2) verbunden ist, so daß ein Spiel der genannten Walzen entfernt wird, wenn die genannten Walzen geschnitten werden.

6. Eine Walzenschneidvorrichtung gemäß Anspruch 5, wobei die genannte Drückvorrichtung (16) so eingerichtet ist, dass sie auf eine Ziehvorrichtung des genannten Walzwerks (1) einwirkt.

7. Eine Walzenschneidvorrichtung gemäß einem der Ansprüche 4, 5 oder 6, wobei der genannte Positionsausrichtungssensor des weiteren zumindestens zwei Sensoren umfaßt, wobei ein Sensor an der genannten vorbestimmten Position des genannten Walzwerks (1) angeordnet ist, und der andere Sensor an der genannten Schneidmaschine (8) in einem ersten, vorbestimmten Abstand von dem genannten Schneidwerkzeug (13) angeordnet ist.

8. Eine Walzenschneidvorrichtung gemäß Anspruch 7, die des weiteren eine Einrichtung umfaßt, die einen Bezugspunkt liefert, der sich an der Außenfläche des genannten Walzwerks (1) in einer Position befindet, die von der genannten Walzbahn (2) in einem zweiten, vorbestimmten Abstand angeordnet ist, so daß der an der genannten Schneidmaschine (8) angeordnete genannte Sensor den genannten Bezugspunkt erfassen kann.

9. Eine Walzenschneidvorrichtung gemäß Anspruch 8, die des weiteren eine Bezugssäule (12) umfasst, die an der Außenseite des genannten Walzwerks (1) in einer Position angeordnet ist, die von der genannten Walzbahn (2) einen dritten, vorbestimmten Abstand aufweist, und des weiteren einen Berührungssensor (14) umfaßt, der an der genannten Schneidvorrichtung angeordnet ist, so daß der genannten Berührungssensor (14) das Vorhandensein der genannten Bezugssäule (12) erfassen kann.

10. Eine Walzenschneidvorrichtung gemäß Anspruch 9, wobei der genannte Berührungssensor (14) ausfahrbar und zurückziehbar ist.

11. Eine Walzenschneidvorrichtung gemäß Anspruch 5, wobei die genannte Positionseinstelleinrichtung (9) ein Positionseinstelltisch ist, der in drei Dimensionen bewegbar ist.

12. Eine Walzenschneidvorrichtung gemäß Anspruch 5, wobei die genannten Antriebseinheiten eine Antriebsquelle (10) für horizontale Walzen, die bewegbar angeordnet ist und mit einer Tragwelle (15) einer jeden der genannten horizontalen Warzen (3) lösbar verbunden ist, so daß die genannten horizontalen Walzen (3) während der Schneidvorgänge gedreht werden, und Antriebsquellen (11) für vertikale Walzen umfassen, von denen jede bewegbar angeordnet ist und mit einer Tragwelle (15) einer jeden der genannten vertikalen Walzen (4) lösbar verbunden ist, so daß die genannten vertikalen Walzen (4) während der Schneidvorgänge gedreht werden.

13. Eine Walzenschneidvorrichtung gemäß Anspruch 12, die des weiteren ein Zahnrad mit Außenverzahnung, das an einem Teil von entsprechender Tragwelle (15) und Antriebseinheit angeordnet ist, und ein Zahnrad mit Innenverzahnung umfaßt, das an dem anderen Teil angeordnet ist, wodurch die entsprechende Tragwelle (15) und die Antriebseinheit verbunden und getrennt werden können.

## Revendications

1. Procédé de taille de cylindres pour tailler des calibres (6) dans des parties de surface périphériques (5) d'au moins deux cylindres rotatifs (3, 4) sensiblement alignés dans lequel une ligne de passage positionnée pratiquement au centre est agencée en disposant lesdites parties de surfaces périphériques (5) desdits cylindres (3, 4) proches les unes des autres, le procédé comprenant les étapes qui consistent à :
(a) positionner lesdits cylindres (3, 4) sans enlever lesdits cylindres de leur laminoir (1) ;
(b) fixer ledit laminoir (1) à une première position prédéterminée ;
(c) aligner un outil de taille (13) d'une machine de taille (8) pour que l'outil de taille (13) soit disposé à une deuxième position prédéterminée par rapport audit laminoir ; et
(d) tailler lesdits calibres (6) desdits cylindres (3, 4) avec ledit outil de taille (13) tout en aboutant lesdites surfaces desdits cylindres (3,4) les unes contre les autres, et tout en poussant lesdits cylindres (3,4) vers la ligne de laminage (2).

2. Procédé de taille de cylindres selon la revendication 1, dans lequel ladite étape de taille comprend en outre la poussée desdits cylindres (3, 4) vers ladite ligne de laminage (2) avec une force de poussée qui est supérieure au poids total desdits cylindres (3, 4) aditionné de tous les roulements (22), boitiers de roulement (23) et arbres de support (15) qui leur sont associés.

3. Procédé de taille de cylindres selon l'une des revendications 1 ou 2, dans lequel ledit alignement dudit outil de taille (13) comprend en outre l'utilisation d'au moins deux capteurs, un desdits capteurs étant disposé à ladite première position prédéterminée dudit laminoir, et un autre desdits capteurs étant disposé à ladite deuxième position prédéterminée de ladite machine de taille (8).

4. Procédé de taille de cylindres selon la revendication 3, dans lequel ladite machine de taille (8) est montée de façon mobile dans les trois dimensions, et dans lequel ledit alignement dudit outil de taille (13) comprend en outre la mise en contact d'un capteur de contact (14), disposé à une position espacée dudit outil de taille (13) d'une première distance prédéterminée, avec un montant de colonne de référence (12) disposée sur la surface externe dudit laminoir à une position espacée de ladite ligne de laminage (2) d'une deuxième distance prédéterminée.

5. Dispositif de taille de cylindres pour tailler des calibres de bords de cylindres concaves (6) dans les surfaces périphériques extérieures (5) de deux cylindres horizontaux (3) et de deux cylindres verticaux (4), dans lequel une ligne de laminage (2) peut être agencée en disposant lesdits cylindres horizontaux et verticaux de telle sorte que leurs surfaces périphériques (5) soient proches les unes des autres, ledit dispositif de taille comprenant :
(a) une table de base (7), sur lequel ledit laminoir est fixé à une position prédéterminée ;
(b) une machine de taille (8), ayant un outil de taille (13) pour tailler les calibres (6) desdits cylindres, reliée de façon mobile à ladite table de base (7) ;
(c) un capteur d'alignement de position, fixé audit dispositif de taille, pour aligner ledit outil de taille (13) avec ledit laminoir (1) ;
(d) un dispositif de réglage de position (9), relié à ladite table de base (7), pour régler les positions relatives dudit laminoir (1) et dudit outil de taille (13) ; et
(e) des unités d'entraînement, reliées de façon amovible auxdits cylindres, pour faire tourner lesdits cylindres.
(f) un poussoir (16) associé pour pousser lesdits cylindres vers ladite ligne de laminage (2) de telle sorte que le jeu desdits cylindres soit supprimé lorsque lesdits cylindres sont taillés.

6. Dispositif de taille de cylindres selon la revendication 5, dans lequel ledit poussoir (16) est un dispositif d'étirage dudit laminoir (1).

7. Dispositif de taille de cylindres selon l'une quelconque des revendications 4, 5 ou 6, dans lequel ledit capteur d'alignement de position comprend en outre au moins deux capteurs, un capteur disposé à ladite première position prédéterminée dudit laminoir (1), et l'autre capteur disposé sur ladite machine de taille (8) à une première distance prédéterminée dudit outil de taille (13).

8. Dispositif de taille de cylindres selon la revendication 7, comprenant en outre des moyens fournissant un point de référence situé sur la surface extérieure dudit laminoir (1) à une position espacée de ladite ligne de laminage (2) d'une deuxième distance prédéterminée, pour que ledit capteur disposé sur ladite machine de taille (8) puisse détecter ledit point de référence.

9. Dispositif de taille de cylindres selon la revendication 8, comprenant en outre un montant de référence (12) disposée sur ladite surface extérieure dudit laminoir (1) à une position espacée de ladite ligne de laminage (2) d'une troisième distance prédéterminée, et comprenant en outre un capteur de contact (14) disposé sur ledit dispositif de taille, pour que ledit capteur de contact (14) puisse détecter la présence dudit montant de référence (12).

10. Dispositif de taille de cylindres selon la revendication 9, dans lequel ledit capteur de contact (14) est extensible et contractable.

11. Dispositif de taille de cylindres selon la revendication 5, dans lequel ledit dispositif de réglage de position (9) est une table de réglage de position mobile dans les trois dimensions.

12. Dispositif de taille de cylindres selon la revendication 5, dans lequel lesdites unités d'entraînement comprennent une source d'entraînement (10) des cylindres horizontaux qui est disposée de façon mobile et reliée de façon amovible à l'arbre de support (15) de chacun desdits cylindres horizontaux (3), de sorte que lesdits cylindres horizontaux (3) soient mis en rotation pendant les opérations de taille, et des sources d'entraînement (11) des cylindres, verticaux chacune étant disposée de façon mobile et reliée de façon amovible à l'arbre de support (15) de chacun desdits cylindres verticaux (4), de sorte que lesdits cylindres verticaux (4) soient mis en rotation pendant les opérations de taille.

13. Dispositif de taille de cylindres selon la revendication 12, comprenant en outre un engrenage mâle disposé sur un élément de l'arbre de support correspondant (15) et d'une unité d'entraînement, et un engrenage femelle disposé sur l'autre élément, par lesquels lesdits arbre de support correspondant (15) et unité d'entraînement peuvent être reliés et déliés.
